# EUROPÄISCHE PATENTANMELDUNG

(11) **EP 1 561 739 A2**
(43) Veröffentlichungstag der Anmeldung: **10.08.2005**
(21) Anmeldenummer: 05001881.1
(22) Anmeldetag: 29.01.2005
(51) Int. Cl.: C04B 38/02, C04B 38/08

(54) **Poröser wärmedämmender Formkörper, Verfahren zu seiner Herstellung und seine Verwendung**

(30) Priorität: 07.02.2004 DE 102004006172
(71) Anmelder: Forschungszentrum Karlsruhe GmbH, 76133 Karlsruhe (DE)
(72) Erfinder: Nüesch, Rolf, Prof. Dr., 76137 Karlsruhe (DE); Burkhard, Dorothee, Dr., 76297 Stutensee (DE)

(57) **Zusammenfassung**

Die Erfindung betrifft einen porösen wärmedämmenden Formkörper, der erhältlich ist durch Temperung einer Mischung im Gewichtsverhältnis 1:1 aus einem Silikat, das ausgewählt ist aus natürlichem oder geblähtem Perlit, Natur- oder Hüttenbims, Blähton oder Blähglas, und einer anorganischen Komponente, die so gewählt ist, dass der Schmelzpunkt der Mischung aus dem Silikat und der anorganischen Komponente im Bereich der Sintertemperatur des Silikats liegt und dass in diesem Temperaturbereich aus der anorganischen Komponente ein Gas freigesetzt wird.

Ein erfindungsgemäßer poröser wärmedämmender Formkörper dient zur Feuchteregulierung als feuchteregulierende Dämmstoffplatte oder als feuchteregulierender Zusatz zu Baustoffen.

## Beschreibung

Die Erfindung betrifft einen porösen wärmedämmenden Formkörper, ein Verfahren zu seiner Herstellung und seine Verwendung.

Seit Jahren sind im Bausektor Wärmedämmstoffe in Plattenform (Dämmstoffplatten) oder als Schüttungen erhältlich. Mineralische Wärmedämmstoffe z. B. auf der Basis von Silikaten wie natürlichem und geblähtem Perlit, Vermiculit, Natur- und Hüttenbims, Blähton und Blähglas sind feuerfest, im Allgemeinen chemisch resistent und umweltfreundlich.

Von besonderem Interesse ist hierbei das vulkanische Glasgestein Perlit (natürliches oder Rohperlit), das durch schockartiges Erhitzen und Expandieren oberhalb von 1000 °C gebläht werden kann. Geblähter Perlit weist eine sehr geringe Wärmeleitfähigkeit von 0,045 W/m·K auf und wird daher als körnige Hohlraumfüllung (Haufwerk) in der Fassadendämmung oder als Ausgleichsschüttung unter Trockenestrich eingesetzt.

Gepresste Perlit-Platten finden insbesondere bei Flachdächern oder Parkdecks Verwendung, wobei deren Wärmedämmung im Vergleich zur Schüttung deutlich geringer ist. Aus DE 197 12 835 A1 sind Formkörper aus Leichtzuschlagstoffen wie Perlit und Vermiculit bekannt, die unter Zugabe eines Alkalisilikats als Bindemittel durch Sinterung bei einer Temperatur zwischen 400°C und 1000°C hergestellt werden. EP 0 475 302 A1 offenbart ein Verfahren, gepresste Perlit-Platten durch Zugabe eines Natriumsilikatbinders bei einem Druck zwischen 2,07 und 35,49 bar und einer Temperatur zwischen 65 und 204°C herzustellen.

Aus DE 199 23 144 A1 ist ein feuerfester Wärmedämmstoff aus Vermiculiten oder Perliten bekannt, dem 5-30 % Mikrohohlkugeln (Aerogele) zugesetzt werden. DE 198 09 590 A1 beschreibt Feuerfestformkörper, die aus Metakaolin, Siliziumdioxid, Alkalisilkat (Wasserglas) sowie 30-70 Gew.-% Perlit bzw. Vermiculit gebildet werden.

Schließlich sind aus DE 198 41 054 A1 Hohlkammerziegel bekannt, deren Luftkammern zur Steigerung der Wärmedämmung mit einem Trocken-Dünnbettmörtel, der Perlit, Vermiculit oder Bims als Leichtzuschlag enthält, gefüllt werden.

Ausgehend hiervon ist es die Aufgabe der vorliegenden Erfindung, einen porösen wärmedämmenden Formkörper aus anorganischen Bestandteilen, ein Verfahren zu seiner Herstellung und dessen Verwendung vorzuschlagen.

Diese Aufgabe wird in Bezug auf den Formkörper durch die Merkmale des Anspruchs 1, in Bezug auf das Verfahren durch die Verfahrensschritte des Anspruchs 6 und in Bezug auf die Verwendung durch die Ansprüche 11 und 12 gelöst. Die Unteransprüche beschreiben jeweils vorteilhafte Ausgestaltungen der Erfindung.

Ein erfindungsgemäßer poröser wärmedämmender Formkörper umfasst das Temperprodukt einer Mischung aus Silikat und einer anorganischen Komponente im Gewichtsverhältnis 1:1. Als Silikat dient eines der natürlichen Silikate (Glas oder Mineral) natürlicher oder geblähter Perlit, Natur- oder Hüttenbims, Blähton oder Blähglas.

Die anorganische Komponente wird so gewählt, dass diese im Bereich der Sinter- bzw. Schmelztemperatur des gewählten Silikats ein Gas freisetzt. Vorzugsweise sind Carbonate, aber auch anorganische Stickstoffverbindungen wie Nitride, Nitrite und Nitrate hierfür geeignet. Weniger geeignet sind zum Beispiel Schwefelverbindungen, da diese wenig umweltfreundlich sind bzw. toxische Eigenschaften aufweisen.

Die Erfindung basiert darauf, dass durch Zugabe der anorganischen Komponente zum Silikat durch gezieltes Aufschmelzen ein poröses Silikatglas hergestellt wird, dessen Dichte im Bereich zwischen 0,4 und 0,9 g/cm³ liegt. Das erfindungsgemäße Temperprodukt besteht aus porösen Silikat, der eine multi-modale Porenverteilung im µm- und mm-Bereich besitzt.

In einer bevorzugten Ausgestaltung bildet eine Mischung aus natürlichem oder geblähtem Perlit und Natriumcarbonat Na₂CO₃ die Grundlage für das erfindungsgemäße Temperprodukt. Grundsätzlich kommt für einen erfindungsgemäßen Formkörper jedes Silikat in Frage, soweit es für dieses ein geeignetes Carbonat oder eine geeignete Stickstoffverbindung gibt.

Zur Herstellung eines porösen wärmedämmenden Formkörpers wird das Silikat in Verfahrensschritt a) bereitgestellt und in Verfahrensschritt b) mit einer geeigneten anorganischen Komponente, bevorzugt Carbonat, im Gewichtsverhältnis 1:1 vermischt. Diese Komponente ist allgemein so zu wählen, dass der Schmelzpunkt der Mischung aus dem Silikat und der anorganischen Komponente im Bereich der Sintertemperatur des Silikats liegt und dass in diesem Temperaturbereich aus der Komponente ein Gas freigesetzt wird. Die Mischung wird entsprechend Verfahrensschritt c) rasch und kurzzeitig bis zum Schmelzpunkt dieser Mischung erhitzt, so dass partiell ein Gas, im Falle eines Carbonats Kohlendioxid CO₂, entweicht und hierbei die Silikatschmelze porosiert. Der so hergestellte poröse wärmedämmende Formkörper wird schließlich gemäß Verfahrensschritt d) abgekühlt und entnommen.

Anstelle der Sintertemperatur ist darüber hinaus jede andere Temperatur, bei der die Silikat-Komponente eine Reaktion erfährt, wie z. B. eine Entwässerung, geeignet.

Der Silikat-Komponente wird ein Blähmaterial beigefügt, dessen Entgasung bei einer Temperatur erfolgt, die im Bereich der Schmelztemperatur der Mischung aus Silikat und anorganischer Komponente als Blähmaterial liegt. Dies berücksichtigt, dass es bei der Mischung der beiden Komponenten Silikat und Blähmaterial zu einer Schmelzpunkterniedrigung kommt. Entweicht zu viel Kohlendioxid, steigt der Schmelzpunkt der Mischung an.

In einer bevorzugten Ausgestaltung wird natürlicher oder geblähter Perlit zur Herstellung eines porösen wärmedämmenden Formkörpers auf mineralischer Basis gewählt. Geblähter Perlit ist ein Haufwerk eines hochporösen Granulates, das jedoch keine eigene Formstabilität aufweist. Als mineralischer Rohstoff ist er jedoch bereits feuerfest und chemisch weitestgehend resistent.

Im Falle einer Mischung aus geblähtem Perlit und Natriumcarbonat erfolgt die Temperung bei einer Temperatur zwischen jeweils einschließlich 800 °C und 820 °C. Im Falle einer Mischung aus natürlichem Perlit und Natriumcarbonat erfolgt die Temperung bei einer Temperatur zwischen jeweils einschließlich 840 °C und 860 °C. Besonders vorteilhaft ist, dass beim Einsatz von natürlichem Perlit das Erhitzen und Expandieren oberhalb von 1000 °C entfällt.

Überraschenderweise lässt sich in dieser bevorzugten Ausgestaltung ein poröser wärmedämmender Formkörper mit geringer Dichte herstellen, der gleichzeitig feuchteregulierend wirkt. Es wurde beobachtet, dass beim Abkühlen des Temperprodukts eine neue Komponente mit feuchteregulierenden Eigenschaften, und zwar Natrium-Zeolith, ausfällt. Mit Natrium-Zeolithen, die beim Abkühlen in den Porenräumen ausblühen, erreicht man die Herstellung eines porösen wärmedämmenden und feuchteregulierenden Formkörpers in einem einzigen Herstellungsschritt.

Aufwachsende Natrium-Zeolithe sind insbesondere zur Feuchteregulierung geeignet. Aufgrund ihrer großen internen Oberfläche von 50-1000 m²/g sind Natrium-Zeolithe in der Lage, Feuchte aus der Dampfphase reversibel einzubauen. Mit anderen Worten: Natrium-Zeolithe können Feuchte sowohl adsorbieren als auch desorbieren.

Experimentelle Untersuchungen zum Sorptionsverhalten haben gezeigt, dass bei der Adsorption und Desorption von Feuchtigkeit aus der Umgebung keine Hysterese in erfindungsgemäßen porösen wärmedämmenden Formkörpern, sondern praktisch eine vollständige Wiederabgabe der Feuchte (Desorption) auftritt. Bezogen auf das Gesamtgewicht des Formkörpers wurde eine Gewichtszu- bzw. -abnahme um 200 % bei Variation der Luftfeuchtigkeit zwischen 40 % und 98 % beobachtet.

Es gibt eine Vielzahl von Wärmedämmstoffen auf mineralischer Basis. Diese Materialien regulieren jedoch die Feuchte nicht, sondern verlieren bei der Aufnahme von Feuchte einen Großteil ihrer Wärmedämmeigenschaften. Die Bereitstellung einer zusätzlichen Eigenschaft wie der Feuchteregulierung stellt einen erheblichen Vorteil für die Baubranche dar.

In dieser bevorzugten Ausgestaltung besitzt der poröse wärmedämmende Formkörper aus Perlit und Natriumcarbonat zusätzlich zur Wärmedämmung die Eigenschaft der Raumfeuchteregulierung, die insbesondere dazu geeignet ist, um gezielt Baufeuchte abzuleiten, Schimmelpilzbildung zu vermeiden oder einfach, um ein angenehmes Raum- und Wohnklima zu schaffen. Während in herkömmlichen Wärmedämmstoffen die Wärmedämmung mit zunehmender Luftfeuchte abnimmt, ist im erfindungsgemäßen Formkörper darüber hinaus die Wärmedämmung vom Feuchtigkeitsgrad abgekoppelt, da die Wärmebrücken nicht identisch mit dem feuchteregulierenden Material (Natrium-Zeolith) sind.

Erfindungsgemäße Formkörper lassen sich daher als Wärmedämmstoff zum Beispiel in Form von Dämmstoffplatten verwenden, sie sind aber insbesondere als feuchteregulierender Wärmedämmstoff etwa in Form einer Dämmstoffplatte mit feuchteregulierenden Eigenschaften oder zerkleinert und beigefügt zu Baustoffen wie Putz einsetzbar. Generell lassen sich erfindungsgemäße Formkörper oder hieraus hergestellte Granulate als Baustoff oder Bauhilfsstoff einsetzen.

Die Erfindung wird im Folgenden anhand von Ausführungsbeispielen näher erläutert. Die Abbildungen zeigen
- **Fig. 1**: Differentiale Thermoanalyse (*Differential Scanning Calorimetry* DSC) von geblähtem Perlit in Luft. Die Heizrate betrug 20 K/min. Bei ca. 700 °C beginnt exotherm der Sinterprozess.
- **Fig. 2**: Differentiale Thermoanalyse (DSC) eines Gemisches aus geblähtem Perlit und Natriumcarbonat im Gewichtsverhältnis 1:1, aufgenommen an Luft. Die Heizrate betrug 20 K/min. Der endotherme Peak bei ca. 850 °C liegt bei der Schmelztemperatur des Carbonats (852 °C).
- **Fig. 3**: Aufnahme eines verfestigten formstabilen Perlits, der mit dem erfindungsgemäßen Verfahren hergestellt wurde.
- **Fig. 4**: Aufnahmen mit dem Bin-Okular zeigen Poren im Temperprodukt aus geblähtem Perlit und Natriumcarbonat in mm-Größe. Maßstab: 1000 µm und 500 µm.
- **Fig. 5**: Aufnahmen mit dem ESEM (*Environmental Scanning Electron Microscope*) zeigen die poröse Struktur im Temperprodukt aus geblähtem Perlit und Natriumcarbonat in multi-modaler Verteilung im µm-Bereich. Im rechten Bild sind die beim Abkühlen ausgeblühten Natrium-Zeolithe, die Feuchtigkeit regulieren können, zu erkennen.
- **Fig. 6**: Isothermes Sorptionsverhalten einer Probe aus geblähtem Perlit und Natriumcarbonat, aufgenommen mittels Dynamischer Dampfsorptionsmethode (DVS).

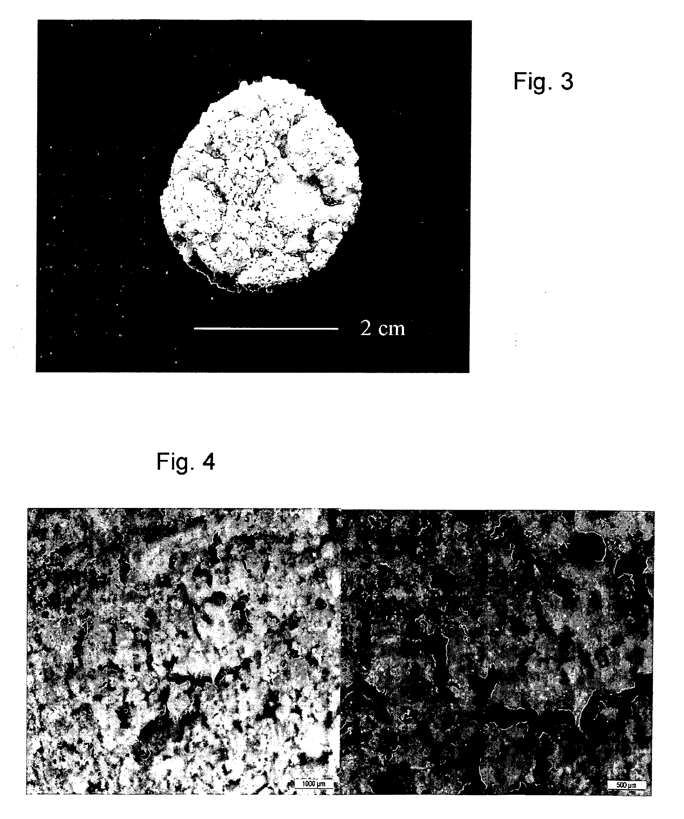

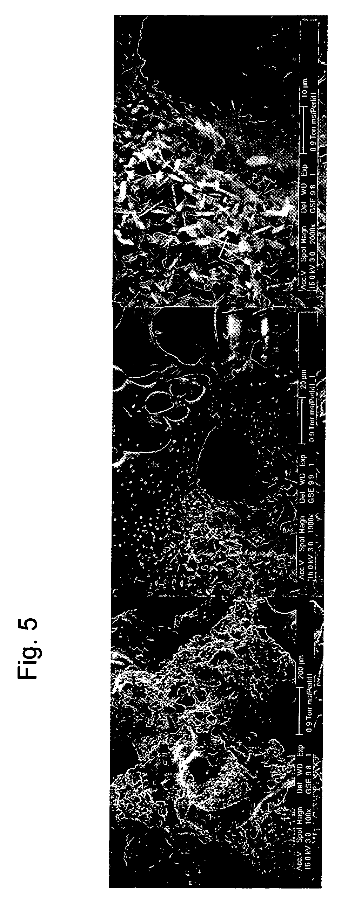

In einem ersten Beispiel werden 2 g geblähter Perlit mit 2 g Natriumcarbonat Na₂CO₃ im Gewichtsverhältnis 1:1 vermischt und in einem zylindrischen Tiegel in einem Kammerofen bei 800 °C für 15 Minuten getempert. Je nach eingesetzter Menge beträgt die Temperzeit ca. 10-20 Minuten. Man erhält so einen formstabilen Zylinder (**Fig. 3**), der Poren im Mikrometer-Bereich aufweist (**Fig. 4**), in denen Natrium-Zeolith ausgeblüht ist (**Fig. 5**). Abweichungen des anfänglichen Gewichtsverhältnisses von bis zu ± 5 Prozent sind belanglos für das Ergebnis.

In einem zweiten Beispiel werden 2 g natürlicher Perlit mit 2 g Natriumcarbonat Na₂CO₃ im Gewichtsverhältnis 1:1 vermischt und in einem Kammerofen bei 850 °C für 20 Minuten getempert. Je nach eingesetzter Menge beträgt die Temperzeit ca. 15-30 Minuten.

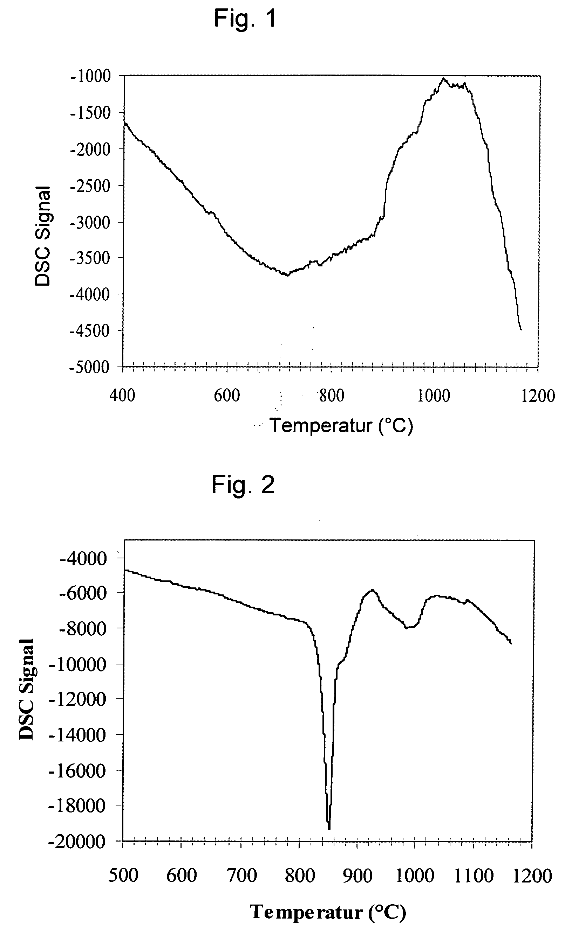

Die DSC-Aufnahme (Differential Scanning Calorimetry) in **Fig. 1** zeigt, dass geblähter Perlit ab ca. 700 °C zu sintern beginnt. Der Schmelzpunkt von Natriumcarbonat Na₂CO₃ liegt bei 852 °C. DSC-Aufnahmen eines Gemisches aus Na₂CO₃ und geblähtem Perlit im Gewichtsverhältnis von 1:1 zeigen, dass die Mischung bei ca. 800 °C aufzuschmelzen beginnt und dass der endotherme Schmelzpeak praktisch mit demjenigen von Na₂CO₃ zusammenfällt (852 °C). Beim Abkühlen wird Natrium-Zeolith, der feuchteregulierend wirkt, zur Ausfällung gebracht. Da die Feuchteregulierung über die Natrium-Zeolithe erfolgt und nicht über das Glas, bleibt die Wärmedämmung von der jeweils herrschenden Feuchtigkeit unbeeinträchtigt.

Aufgrund von Schmelzpunkterniedrigung kommt es bereits beim Tempern bei 800 °C zur Aufschmelzung des Gemisches von geblähtem Perlit und Na₂CO₃. Hierbei werden zwei Glaskomponenten mit unterschiedlichem Natrium-Gehalt gebildet. EDS-Analyse ergab, dass der ursprüngliche Perlit angeschmolzen wird und sich zwei Mischschmelzen mit verschiedenem Natrium-Gehalt bilden. Während des Aufschmelzens entweicht CO₂ partiell, was aufgrund der relativ hohen Viskosität des Silikatglases zur Ausbildung von Poren im Bereich von einigen µm bis einigen mm führt.

Die Dichte des erfindungsgemäß hergestellten Formkörpers liegt bei ca. 0,5 g/cm³, während dessen Stoffdichte 2,1 g/cm³ beträgt. Dessen Druckfestigkeit ist größer als 1500 kN/m². ESEM-Aufnahmen (**Fig. 5**) zeigen, dass auf der Oberfläche des Materials Natrium-Zeolithe ausgeblüht sind, die für ihre gute Feuchtigkeits-Adsorption und -Desorption bekannt sind. Legt man den Formkörper in Wasser, werden die Natrium-Zeolithe herausgelöst, und zwar bereits nach 5 Min. Der Wärmedämmstoff selbst bleibt unversehrt, auch nach dreiwöchiger Lagerung in Wasser.

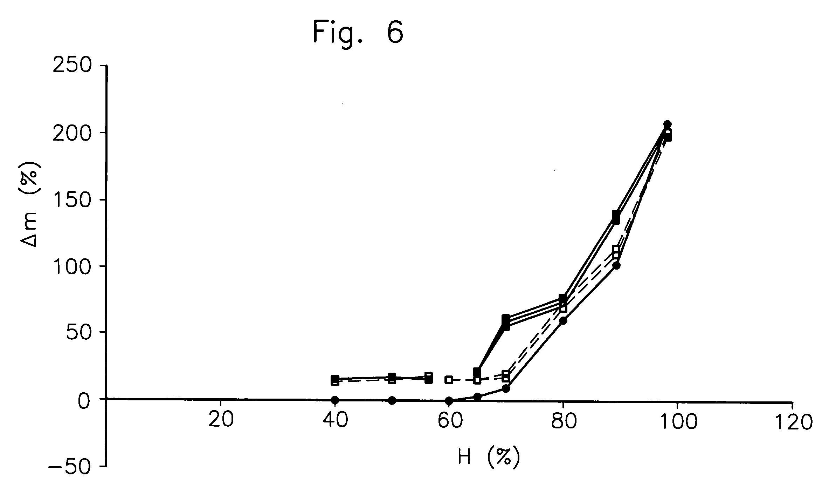

Das isotherme Sorptionsverhalten einer Probe, die aus geblähtem Perlit mit Natriumcarbonat hergestellt wurde, wurde anhand der Dynamischen Dampf-Sorptionsmethode (DVS, *Differential Vapour Sorption*) getestet. Nachdem sich bei 0 % Feuchte ein Gleichgewicht eingestellt hatte, wurde die Feuchte schrittweise erhöht. Messungen zwischen 40 und 98 % Luftfeuchte sind für drei Zyklen in **Fig. 6** dargestellt. Hierbei bezeichnen H(%) die Feuchte in % und Δm (%) die Massenzunahme bzw. -abnahme in Bezug zur trockenen Probe, für die Δm (%) = 0 % gesetzt wird.

**Fig. 6** zeigt eine Gewichtszunahme um 200 % bezogen auf das Gesamtgewicht der Probe (Dämmstoff) aufgrund von Wasseradsorption. Die Desorption erfolgt praktisch ohne Hysterese und das Wasser wird vollständig wieder abgegeben. Dieses Sorptionsverhalten wird von Zeolithen auf der Glasoberfläche, wie z.B. in **Fig. 5** dargestellt, herbeigeführt. Ein geringer Anteil von etwa 14 % bleibt nach dem ersten Zyklus in der Zeolithstruktur gebunden, beeinträchtigt das Sorptionsverhalten weiterer Zyklen jedoch nicht.

## Patentansprüche

1. Poröser wärmedämmender Formkörper, erhältlich durch Temperung einer Mischung im Gewichtsverhältnis 1:1 aus
- einem Silikat, das ausgewählt ist aus natürlichem oder geblähtem Perlit, Natur- oder Hüttenbims, Blähton oder Blähglas, und
- einer anorganischen Komponente, die so gewählt ist, dass der Schmelzpunkt der Mischung aus dem Silikat und der anorganischen Komponente im Bereich der Sintertemperatur des Silikats liegt und dass in diesem Temperaturbereich aus der anorganischen Komponente ein Gas freigesetzt wird.

2. Poröser wärmedämmender Formkörper nach Anspruch 1, **dadurch gekennzeichnet, dass** ein Carbonat oder eine Mischung aus Carbonaten als anorganische Komponente gewählt wird.

3. Poröser wärmedämmender Formkörper nach Anspruch 2, **dadurch gekennzeichnet, dass** natürlicher oder geblähter Perlit als Silikat und Natriumcarbonat als anorganische Komponente gewählt werden.

4. Poröser wärmedämmender Formkörper nach Anspruch 4, **dadurch gekennzeichnet, dass** in dessen Poren Natrium-Zeolithe auftreten.

5. Poröser wärmedämmender Formkörper nach einem der Ansprüche 1 bis 4, **dadurch gekennzeichnet, dass** dessen Dichte im Bereich zwischen 0,4 g/cm³ und 0,9 g/cm³ liegt.

6. Verfahren zur Herstellung eines porösen wärmedämmenden Formkörpers, umfassend die folgenden Verfahrensschritte:
a) Bereitstellen eines Silikats, ausgewählt aus natürlichem oder geblähtem Perlit, Natur- oder Hüttenbims, Blähton oder Blähglas,
b) Mischen des Silikats im Gewichtsverhältnis 1:1 mit einer anorganischen Komponente, die so gewählt ist, dass der Schmelzpunkt der Mischung aus dem Silikat und der anorganischen Komponente im Bereich der Sintertemperatur des Silikats liegt und dass in diesem Temperaturbereich aus der Komponente ein Gas freigesetzt wird,
c) Tempern der Mischung bei einer Temperatur im Bereich der Sintertemperatur des Silikats, wodurch das Gas aus der anorganischen Komponente teilweise freigesetzt und eine Silikatschmelze gebildet wird, in die das freigesetzte Gas eindringt und in der Silikatschmelze Poren erzeugt,
d) Abkühlen und Entnehmen des so hergestellten porösen wärmedämmenden Formkörpers.

7. Verfahren zur Herstellung eines porösen wärmedämmenden Formkörpers nach Anspruch 6, **dadurch gekennzeichnet, dass** ein Carbonat oder eine Mischung aus Carbonaten als anorganische Komponente gewählt wird.

8. Verfahren zur Herstellung eines porösen wärmedämmenden Formkörpers nach Anspruch 6 oder 7, **dadurch gekennzeichnet, dass** natürlicher oder geblähter Perlit als Silikat und Natriumcarbonat als anorganische Komponente gewählt wird.

9. Verfahren zur Herstellung eines porösen wärmedämmenden Formkörpers nach Anspruch 8, **dadurch gekennzeichnet, dass** eine Mischung aus geblähtem Perlit und Natriumcarbonat bei einer Temperatur zwischen 800 °C und 820 °C getempert wird.

10. Verfahren zur Herstellung eines porösen wärmedämmenden Formkörpers nach Anspruch 8, **dadurch gekennzeichnet, dass** eine Mischung aus natürlichem Perlit und Natriumcarbonat bei einer Temperatur zwischen 840 °C und 860 °C getempert wird.

11. Verwendung eines porösen wärmedämmenden Formkörpers nach einem der Ansprüche 1 bis 5 zur Feuchteregulierung.

12. Verwendung eines porösen wärmedämmenden Formkörpers nach Anspruch 11 als feuchteregulierende Dämmstoffplatte oder als feuchteregulierender Zusatz zu Baustoffen.
